# EUROPEAN PATENT SPECIFICATION

(11) **EP 4 252 533 B1**
(45) Date of publication and mention of the grant of the patent: **28.08.2024**
(21) Application number: 20838587.2
(22) Date of filing: 30.11.2020
(51) Int. Cl.: A01M 1/20

(54) **INSECT TRAP**
INSEKTENFALLE
PIÈGE DES INSECTES

(43) Date of publication of application: 04.10.2023
(73) Proprietor: Mylva S.A., 08006 Barcelona (ES)
(72) Inventor: PICAS BERNADELL, Albert-Mateu, 08006 BARCELONA (ES); SAIZ PONSETI, Andrea, 08302 MATARO (ES); PRATS PERICAS, Antonio, 08911 BADALONA (ES); BRONCANO ATENCIA, Antonio, 08460 SANTA MARIA DE PALAUTORDERA (ES); SORRIBES BAÑERES, Sílvia, 08221 TERRASSA (ES)
(74) Representative: Sugrañes, S.L.P.
(86) International application number: PCT/ES2020/070749
(87) International publication number: WO 2022/112623

(56) References cited:
- EP-A1- 1 946 636
- US-A1- 2006 207 164
- US-A1- 2010 205 850

## Description

### Technical field of the invention

The reusable system and method for combatting insects of the present invention is one of those that has a station provided with a bait or other anti-insect components, suitable for controlling insect pests.

### Background of the invention

Stations for combatting insects are known which are formed by a station provided with a tank storing liquid or semisolid bait, such that when the station is activated, the bait contained in the tank is exposed so that the insects can consume it. When the bait of the station is consumed or dried out and is no longer attractive to insects, the station must be eliminated and replaced if the insects are to be combatted against still. In these types of stations, the bait must be placed when it is manufactured, for which reason it cannot be modified later, it being necessary to provide different bait stations for different types of insects. Sometimes, when activating the station, the bait may already be deteriorated, with which the station is considered useless and must be eliminated. Patent document US20030145511 presents one of these known bait stations. As further relevant prior art the following documents can be considered: EP 1 946 636 A1, US 2006/207164 A1, US 2010/205850 A1.

It is therefore an objective of the present invention to provide a system and method for combatting insects which enables the station to be reused after use, even with different types of bait or other components for eliminating insects.

It is another objective of the present invention to provide a system and method for combatting insects that is also flexible, such that it can be configured to attract and eliminate different species and groups of insects, even if they have different diets.

### Description of the invention

The reusable system for combatting insects of the present invention comprises a capsule which forms at least one compartment with an anti-insect component, the capsule being provided with a removable cover joined to a tab, such that the capsule can be at least partially uncovered when the tab is pulled, for example by removing or tearing the removable cover like a lid, when the tab is pulled, the tab and the removable cover, for example, being glued or joined or even forming a single part.

The system also comprises a reusable station provided with an inner housing, in order to reversibly receive and house the capsule determining an operating position, the station being provided with a suitable loading opening in order to enable the insertion and removal of the capsule from said housing, and the station further being provided with a communication with the outside which enables the tab of the capsule to protrude outside of the housing or the access thereto when the capsule is inserted into the housing in the operating position and thus be able to pull the tab in order to at least partially uncover the capsule without removing it from the housing and exposing the anti-insect component.

Advantageously, since the anti-insect component/s is/are arranged inside the respective compartment thereof of the capsule and do not spill into the station, the station is not contaminated, for which reason after the anti-insect component/s runs/run out, such as a liquid, gel, granular or compact solid bait, or an adhesive to trap insects or even a combination of both, the capsule can be replaced by reassembling and reusing the station without having to dispose of it.

In one embodiment, the capsule comprises a cup, the removable cover closing the cup on top, such that the cup is arranged on the base of the station retaining the anti-insect component/s from the compartments of the capsule. It is envisaged that the compartment/s of the capsule is/are formed in the cup. Advantageously, the station will be adapted to be placed on an essentially horizontal surface, such as the ground, in order to facilitate the access of the target insects, such that the cup of the capsule stays horizontal by way of a container, preventing the bait or the contents of the compartments of the capsule from spilling into the station, especially if it is not solid.

In one embodiment, the loading opening is a side opening of the station which enables, once the station is placed on a horizontal surface, the capsule to be inserted into and removed from the housing while maintaining the horizontality of the capsule. In this manner, it is achieved that not only is it easier to insert the capsule, but also the contents of the compartments of the cup are prevented from spilling into the station when the capsule is removed or during use.

In one embodiment, it is envisaged that the communication with the outside adapted to enable the outlet of the tab of the capsule when the cup is housed in the housing is part of the loading opening, the tab being sized in order to protrude outside of the housing when the capsule is inserted into the housing, such that the tab can be pulled and the cup can be at least partially uncovered in order to activate the station.

It is also foreseen that the communication with the outside is arranged in other points of the station, for example that the communication with the outside is an opening of the station opposite from the loading opening, or even an opening in the top of the station, the tab being sized in order to protrude outside of the housing when the capsule is inserted into the housing, in the operating position.

In one embodiment, the capsule further comprises a handle, for example joined to the cup, in order to be held for example with two fingers and comfortably manipulate the capsule. Preferably, it is foreseen that the handle is integrated into the capsule, for example integrated into the cup, and being able to manufacture the cup and the handle together, for example by means of the same mould.

In one embodiment, the handle is sized in order to project from the station as the capsule is inserted into the housing in the operating position, in order to enable the capsule to be comfortably removed from the station in order to reuse the station.

It is envisaged that the station can be manufactured as a plastic injection part, for example made of polypropylene, polyethylene, polyamide or ABS. Preferably, the station can be formed starting from two parts, one of which will form the base and the other will form the top, both parts being provided with joining elements which enable them to fit together in order to form the station. The capsule may be manufactured as a thermoformed plastic part, for example by integrally manufacturing the cup and the handle in PET-PETG, PVC or ABS, or even in aluminium.

It is also envisaged that it can be made alternatively as a plastic injection part. The removable cover of the cup can be made of aluminium, a bilayer of PET-PET, or a mixture of paper and PET with metal, optionally. It is also envisaged that the plastics or materials from which the station and the capsule are formed comprise biodegradable or compostable materials.

In one embodiment, the station is provided with retaining means of the capsule, for example the cup of the capsule, which enables the capsule to be press fitted into the housing as properly oriented, and prevents the capsule from moving out of the housing, for example if it is accidentally hit or the station is manipulated.

In one embodiment, the retaining means of the station comprise a profile adapted to receive the fit of the capsule, for example of the cup, said profile being connected to the outside of the station determining access ramps for insects, such that a quick access is provided to the components of the compartments for the target insects.

In one embodiment, the retaining means of the station comprise one or more projections between the loading opening and the housing which obstruct the passage of the capsule, in other words, in the channel leading from the loading opening to the housing, and require a certain force to be applied in order to overcome said projections, for example by requiring the capsule to slightly bend in order to pass through the projection/s or by requiring the projection/s to slightly bend, for example by bending the walls of the station if the projections are formed on the walls of the station. It is envisaged that the user can hold the station with one hand, while with the other hand they can insert or remove a capsule from the housing. Thanks to these projections it is advantageously achieved that the capsule is sufficiently retained in the housing, such that the tab can be pulled in order to open the capsule if it comes out of the housing. Naturally, the force that is necessary to overcome the projections will be determined such that there is a compromise between the force that the user has to exert in order to insert and remove the capsule and that the capsule stays sufficiently retained such that it can be uncovered without it coming out of the housing.

In one embodiment, the station is provided with guide means and the capsule is provided with tracking means complementary to the guide means which guide the sliding of the capsule in the direction of insertion and removal in the housing, in order to thus facilitate the correct insertion and orientation of the capsule favouring the tab being correctly located. It is envisaged that the tab may project from the station, in some embodiments, through openings other than the loading opening, for example it is foreseen that the tab may project through an opening located at the opposite end of the station wherein the loading opening is located.

In one embodiment, the guide means comprise at least one rib and the tracking means comprise at least one groove complementary to the rib. It is foreseen that the rib and the groove are straight, the rib being preferably straight and in the direction of the loading opening in order to facilitate the guided and oriented access of the capsule in the housing. Naturally, several ribs can also be located, for example, the cup having respective grooves.

In one embodiment, the groove is determined by the separation of at least two compartments of the capsule.

In one embodiment, the capsule forms a plurality of compartments, preferably formed in the cup, with different anti-insect components, for example with components intended for differentiated insects, such as ants, cockroaches or silverfish. In a specific embodiment, the cup of the capsule forms two compartments with different components directed against differentiated insects and with different diets, for example appetising baits for differentiated insects. It is foreseen that the anti-insect component/s of the compartments comprise an anti-insect bait or an insect-trapping adhesive, or even combinations of both.

A method for combatting insects is further presented, preferably using the system described above, which comprises inserting into an inner housing of a station a capsule, preferably provided with a cup, with at least one compartment with an anti-insect component and a removable cover which closes the capsule, for example which closes the cup of the capsule on top like a lid, the removable cover being provided with a tab adapted to at least partially uncover the capsule by pulling the tab, the tab protruding from the station when the capsule is housed in the housing; and pulling the tab in order to at least partially uncover the capsule and expose the anti-insect component.

### Brief description of the drawings

As a complement to the description provided herein, and for the purpose of helping to make the features of the invention more readily understandable, the present specification is accompanied by a set of drawings which, by way of illustration and not limitation, represent the following:
Fig. 1a shows a system according to the present invention formed by a station and a capsule before the coupling thereof;
Fig. 1b shows a view of the system of Fig. 1a without the top of the station;
Fig. 2a shows the system of Fig. 1a with the station and the capsule coupled in the operating position;
Fig. 2b shows a front view of the system of Fig. 2a;
Fig. 2c shows a view of the system of Fig. 2a without the top of the station;
Fig. 3 shows the system of Fig. 1a during the activation thereof;
Fig. 4a shows the system of Fig. 1a activated;
Fig. 4b shows the system of Fig. 4a without the top of the station.
Figs. 5 and 6 show another embodiment of the system of the present invention.

### Detailed description of the drawings

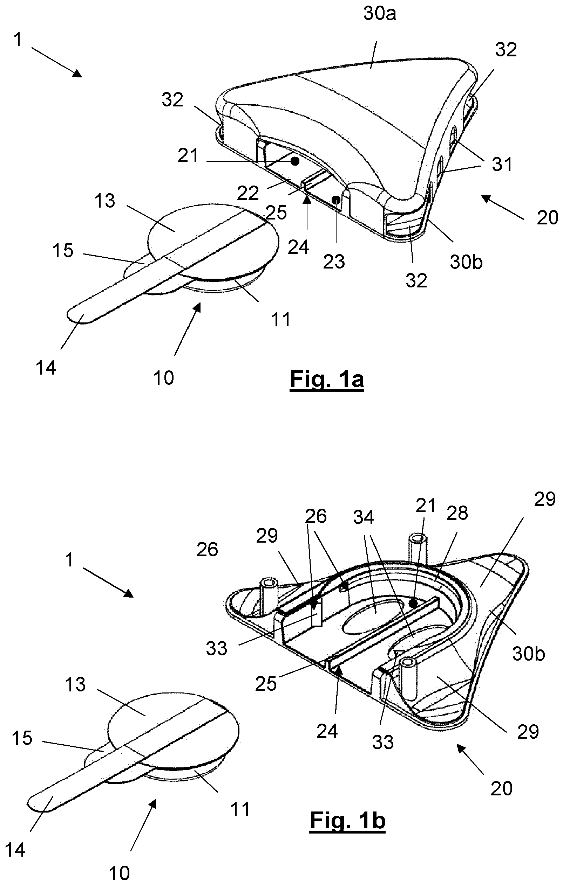

Figs. 1a and 1b show a system 1 for combatting insects according to the present invention formed by a station 20 and a capsule 10, shown in a correlative coupling position, after which the operating position of the system 1 will be established.

The capsule 10 forms at least one compartment 12 with an anti-insect component, the capsule 10 being provided with a removable cover 13 joined to a tab 14, such that the capsule 10 can be at least partially uncovered by pulling the tab 14. Specifically, in this embodiment, the capsule 10 is provided with a cup 11, generally a cylindrical or frustoconical shape, wherein the compartment/s 12 is/are formed, as will be seen later, with at least one anti-insect component. The capsule 10 is further provided with a removable cover 13 which closes the cup 11 on the top by way of a lid, the removable cover 13 being provided with a tab 14 adapted to at least partially uncover the cup 11 when the tab 14 is pulled, for example removing, peeling or tearing the removable cover 13. As will be seen, this capsule 10 will be a consumable which will be able to be used when it is inserted into the station 20, such that different capsules 10 can be used sequentially in a station 20, thus being able to reuse the station. Naturally, the capsules 10 which will be able to be used in the same station 20 sequentially will be able to be different from each other, for example having different arrangements of compartments 12 with different anti-insect components. Although the cup 11 will preferably have a generally frustoconical shape forming a container, which will enable the correct orientation and fit thereof in the station 20, it is also foreseen that the cup 11 may have other geometric shapes, the station 20 being suitably adapted for the correct orientation and fit thereof.

The station 20 is formed by a base 30b joined fitted to a top 30a and provided with an inner housing 21, in order to reversibly receive and house the capsule 10, preferably in order to reversibly receive and house the cup 11 of the capsule 10. As seen, the station 20 is provided with a loading opening 22, in this case the loading opening 22 is a side opening of the station 20, suitable to enable the insertion and removal of the capsule 10 from said housing 21, and the station 20 further being provided with a communication with the outside 23 which enables the tab 14 of the capsule 10 to protrude outside of the housing 21 or the access thereto when the capsule 10 is inserted into the housing 21 in the operating position and thus be able to pull the tab 14 in order to at least partially uncover the capsule 10 without removing it from the housing 21 and exposing the anti-insect component. In this manner, the station 20 is adapted to receive the coupling of the capsule 10 for the uncovering and activation thereof. In the shown embodiment the communication with the outside 23 is part of the loading opening 22 and the tab 14 of the capsule 10 will be sized in order to protrude outside of the housing 21 when the capsule 10 is inserted into the housing 21. Preferably, the loading opening 22 and the housing 21 of the station 20 will be configured so that the capsule 10 is properly oriented when it is inserted into the housing 21 adopting the operating position, such that it is possible to access and pull the tab 14 in order to at least partially uncover the capsule 10.

As seen, the capsule 10 further comprises a handle 15 integrated into the body of the capsule 10, in this case integrated into the cup 11, and which enables the capsule 10 to be held for the manipulation thereof, for example between the thumb and index finger of the user, enabling the capsule 10 to be both inserted into the housing 21 and removed 10 from the housing 21 when the capsule 10 is no longer useful. In this manner, for example if the anti-insect component of the capsule 10 runs out, or it is to be replaced with another anti-insect component intended for another type of insects, the capsule 10 can be replaced, enabling the station 20 to be reused with other capsules 10 which may even have different compartments 12 with different anti-insect components. It is noteworthy that in the embodiment shown, the handle 15 is integrated into the cup 11, such that the cup 11 and the handle 15 can be manufactured as a single part. The handle 15 is sized in order to project from the station 20 when the capsule is inserted into the housing 21 in the operating position and thus facilitate the operation of inserting and removing the capsule 10 from the housing 21.

In the embodiment shown, the loading opening 22 is a side opening of the station 20, thus enabling that when the base 30b of the station 20 is placed on a surface, the capsule 10 can be easily inserted into the housing 21, as well being removed afterwards.

It is seen that the housing 21 of the station 20 is provided with guide means 24, in this case a straight rib 25 in the direction of the loading opening 22, and the capsule 10 is provided with tracking means 16, in this case a groove 17 complementary to the rib 25 of the guide means 24 which guide the sliding of the capsule 10 in the direction of insertion and removal in the housing 21. Furthermore, in this case, the groove 17 is determined by the separation of the two compartments 12 of the cup 11.

It is further seen that the station 20 is provided with retaining means 26 of the capsule 10 when it is inserted into the housing 21 in the operating position, which enable, for example, the cup 11 of the capsule 10 to be trapped in the housing 21, in addition to these retaining means 26 favouring the capsule 10 being correctly oriented such that the tab 14 can be pulled. The retaining means 26 comprise a profile 28 adapted to receive the fit of the capsule 10 and retain the cup 11. Said profile 28 is connected to the outside of the station 20 determining access ramps 29 for insects. The profile 28 can be a duly formed wall, adapted to receive the contour of the capsule 10, this wall can be smooth, although it can also be equipped with grooves in order to favour the fit and retention of the capsule 10. It is foreseen that the profile 28 has the same height as the cup 11, such that the cup 11 placed in the housing 21 is at the same level as the ramps 29 and enables the access of the insects to the contents of the capsule 10.

Furthermore, it is seen that between the loading opening 22 and the housing 21, in other words, in the channel leading from the loading opening 22 to the housing 21, there are two projections 33, each one arranged on a side wall which obstruct the passage of the capsule 10 and require a certain force to be applied in order to overcome said projections 33, for example by requiring the capsule 10 to slightly bend elastically in order to pass through the projections 33 or by requiring the projections 33 to slightly bend elastically, for example by bending the walls of the station 20, such that they prevent the capsule 10 from coming out of the housing 21 when the tab 14 is pulled. Naturally, the projection/s 33 can be formed together with the station 20 or be elements added later, for example glued rubber portions. These projections 33 could also be a coating in the channel or even narrow bends or passages in the channel itself which would make it difficult for the capsule 10 to pass and enable it to be sufficiently retained in the housing 21. It is envisaged that the user can hold the station 20 with one hand, while with the other hand they can insert or remove a capsule 10 from the housing 21, holding it by the handle 15. Of course, the projections 33 can also be configured in a different manner, for example by being a projection on the floor of the channel that the capsule 10 must overcome in order to fit into the housing 21. It is also foreseen that the projection/s 33 may be in the housing 21 and enable fitting into portions of the capsule 10 duly prepared to ensure the position and orientation thereof.

As seen, the housing 21 of the station 20 has two lower windows 34 in order to be able to see the lower ends of the two compartments 12, for example by lifting the station 20. These windows 34 can be one or more cavities in the base 30b which do not enable the capsule 10 to pass through them, but which enable the state of the contents of the compartments 12 to be controlled in order to determine if the compartments 12 have run out and the capsule 10 needs to be replaced. In this manner, advantageously, the state of the compartments 12 can be determined without having to manipulate or remove the capsule 10 from the housing 21. Naturally, the compartments 12 are intended to be transparent or translucent in order to enable the inside of the compartments 12 to be seen through the windows 34.

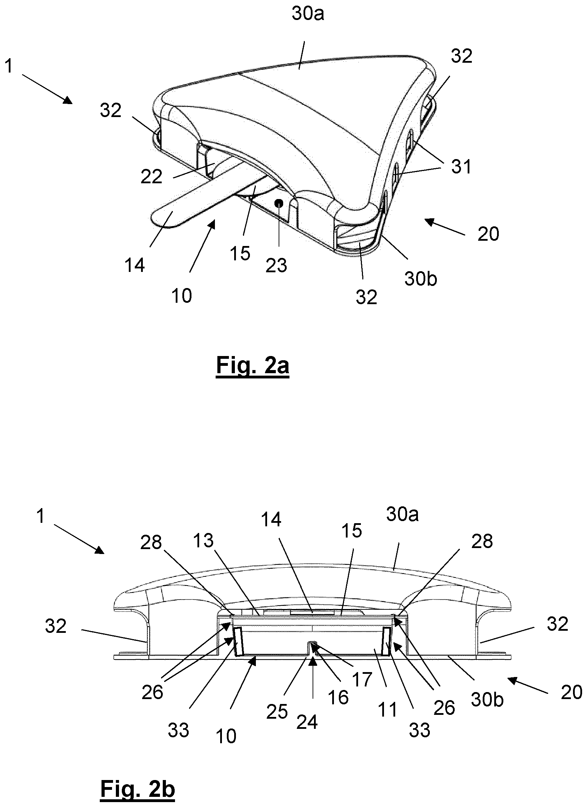

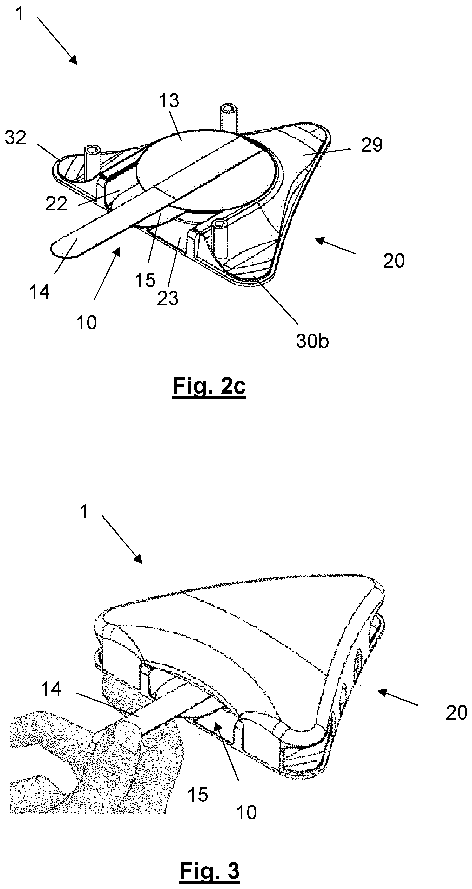

As illustrated in Figs 2a, 2b and 2c, the user, after pushing the capsule 10 by the handle 15, will insert it through the loading opening 22, overcoming the lateral projections 33 to the housing 21 wherein the cup 11 will be retained by the retaining means 26, in this case formed on the one hand by the two projections 33, and on the other by the profile 28 wherein the cup 11 will be fitted or resting in the operating position until the user removes it by stretching through the handle 15.

Advantageously, the station 20 will be provided with a communication with the outside 23 adapted to enable the outlet of the tab 14 of the capsule 10 when the cup 11 is housed and retained in the housing 21.

In this manner, a first step of the method for combatting insects of the present invention is performed, which comprises inserting into a housing 21 inside the station 20 a capsule 10 which forms at least one compartment 12 with an anti-insect component and a removable cover 13, which in this case closes the cup 11 of the capsule on top, the removable cover 13 being provided with a tab 14 adapted to at least partially uncover the capsule 10 when the tab 14 is pulled, the tab 14 protruding from the station 20 when the cup 11 is housed in the housing 21 like a container.

As illustrated in Fig. 3 the user will be able to pull the tab 14 in order to at least partially uncover the cup 11 and expose the anti-insect component stored in the compartments 12 of the capsule 10, thus activating the station 20.

In this manner, a second step of the method for combatting insects of the present invention is performed, which comprises pulling the tab 14 in order to at least partially uncover the capsule 10, in this case uncovering the cup 11 of the capsule 10, and exposing the anti-insect component of the compartments 12 without spilling the anti-insect component of the capsule 10 into the station 20.

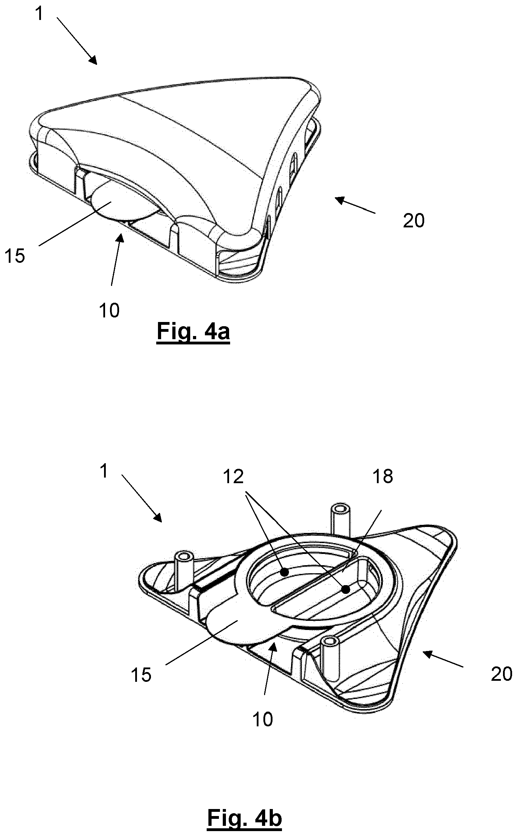

After activating the station 20, in the manner shown in Figs. 4a and 4b, insects will be able to access the anti-insect components located in the compartments 12 of the capsule 10 through the ramps 29 and a set of entrances, in this case a set of smaller entrances 31 and larger entrances 32 located in the station 20. It is foreseen that the ramps 29 associated with the smaller entrances 31, adapted to enable the entry of small and light insects, for example ants, have a steeper slope than the ramps 29 associated with the larger entrances 32, adapted to enable the entry of larger insects, for example cockroaches. It is envisaged that the larger entrances 32 will be located further from the housing 21 of the capsule 10 than the smaller entrances 31, such that the ramps 29 associated with the larger entrances 32 can be longer in order to have a lower slope than the ramps 29 associated with the smaller entrances 31. Specifically, when the station 20 has a polygonal layout, it is foreseen that the larger entrances 32 are located at the vertices of the polygonal layout of the station 20, while the smaller entrances 31 are located on the sides of the polygonal layout of the station 20. As seen in the previous figures, wherein the bait station 20 has a triangular layout, the larger entrances 32 are at the vertices of the triangular layout, while the smaller entrances 31 are on the sides of the triangular layout. It is envisaged that the ramps 29 may also be provided with a certain roughness in order to favour the passage of the insects.

Naturally, although the cup 11 of the capsule 10 shown, and which is seen in Fig. 4b, forms two compartments 12 which can contain differentiated anti-insect components, it is foreseen that the cup 11 of the capsule 10 can form a plurality of compartments 12 with differentiated anti-insect components. It is envisaged that these compartments 12 can be sectors of the cup 11 or even concentric compartments 12 in the cup 11. Furthermore, it is envisaged that the anti-insect component/s may be or may comprise an anti-insect bait or an insect-trapping adhesive, among others.

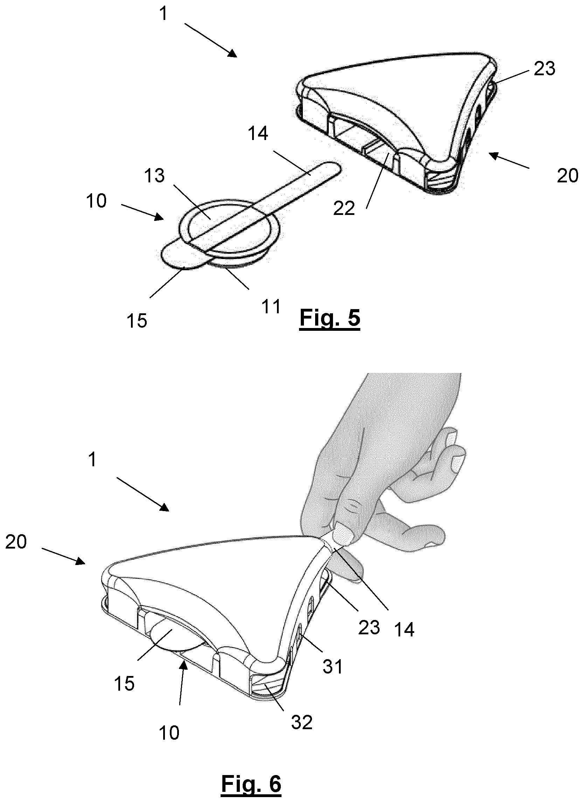

Figs. 5 and 6 show another embodiment of a system 1 for combatting insects according to the present invention, wherein the communication with the outside 23 of the station 20 adapted to enable the outlet of the tab 14 from the capsule 10 when the cup 11 is housed in the housing 21 in order to be able to pull the tab 14 and at least partially uncover the cup 11 in order to expose the anti-insect component is an opening of the station 20 opposite from the loading opening 22. In this case, the tab 14 of the capsule 10 will be sized in order to protrude to the outside of the housing 21 when the capsule 10 is inserted into the housing 21. In this embodiment, the communication with the outside 23 is one of the larger entrances 32 for insects, and that entrance advantageously being able to be used in order to pull the tab 14 and remove the tab 14 and a portion or all of the removable cover 13 in order to uncover the capsule 10 and activate the system 1.

## Claims

1. A system (1) for combatting insects comprising:
a. a capsule (10) which forms at least one compartment (12) with an anti-insect component, the capsule being provided with a removable cover (13) joined to a tab (14), such that the capsule can be at least partially uncovered by pulling the tab; and
b. a reusable station (20) provided with an inner housing (21), in order to reversibly receive and house the capsule, determining an operating position, the station being provided with a suitable loading opening (22) in order to enable the insertion and removal of the capsule from said housing, and the station further being provided with a communication with the outside (23) which enables the tab of the capsule to protrude outside of the housing or the access thereto when the capsule is inserted into the housing in the operating position and thus be able to pull the tab in order to at least partially uncover the capsule without removing it from the housing and exposing the anti-insect component.

2. The system (1) according to the preceding claim, **characterised in that** the capsule (10) comprises a cup (11), the removable cover (13) closing the cup on top.

3. The system (1) according to the preceding claim, **characterised in that** the compartment/s (12) of the capsule (10) is/are formed in the cup (11).

4. The system (1) according to any one of the preceding claims, **characterised in that** the loading opening (22) is a side opening of the station (20).

5. The system (1) according to any one of the preceding claims, **characterised in that** the communication with the outside (23) is part of the loading opening (22) and **in that** the tab (14) is sized in order to protrude to the outside of the housing (21) when the capsule (10) is inserted into the housing.

6. The system (1) according to any one of claims 1 to 4, **characterised in that** the communication with the outside (23) is an opening of the station (20) opposite from the loading opening (22) and **in that** the tab (14) is sized in order to protrude to the outside of the housing (21) when the capsule (10) is inserted into the housing.

7. The system (1) according to any one of the preceding claims, **characterised in that** the capsule (10) comprises a handle (15).

8. The system (1) according to the preceding claim, **characterised in that** the handle (15) is sized in order to project from the station (20) when the capsule is inserted into the housing (21) in the operating position.

9. The system (1) according to any one of the preceding claims, **characterised in that** the station (20) is provided with retaining means (26) of the capsule (10) when it is inserted into the housing (21) in the operating position.

10. The system (1) according to the preceding claim, **characterised in that** the retaining means (26) comprise a profile (28) adapted to receive the fit of the capsule (10), said profile being connected to the outside of the station (20) determining access ramps (29) for insects.

11. The system (1) according to any one of claims 9 to 10, **characterised in that** the retaining means (26) comprise one or more projections (33) between the loading opening (22) and the housing (21) which obstruct the passage of the capsule (10).

12. The system (1) according to any one of the preceding claims, **characterised in that** the station (20) is provided with guide means (24) and the capsule (10) is provided with tracking means (16) complementary to the guide means which guide the sliding of the capsule (10) in the direction of insertion and removal in the housing (21).

13. The system (1) according to the preceding claim, **characterised in that** the guide means (24) comprise at least one rib (25) and the tracking means (16) comprise at least one groove (17) complementary to the rib.

14. The system (1) according to the preceding claim, **characterised in that** the groove (17) is determined by the separation of at least two compartments (12) of the capsule (10).

15. A method for combatting insects with a system according to claims 1 to 14, **characterised in that** it comprises:
a. Inserting into an inner housing (21) of a station (20) a capsule (10) with at least one compartment (12) with an anti-insect component and a removable cover (13), the removable cover being provided with a tab (14) adapted to at least partially uncover the capsule when the tab is pulled, the tab projecting from the station when the capsule is housed in the housing in an operating position; and
b. Pulling the tab in order to at least partially uncover the capsule and expose the anti-insect component.

## Patentansprüche

1. System (1) zur Bekämpfung von Insekten umfassend:
a. eine Kapsel (10), welche mindestens eine Kammer (12) mit einer Insektenschutzkomponente bildet, wobei die Kapsel mit einer abnehmbaren Abdeckung (13) versehen ist, welche mit einer Lasche (14) verbunden ist, sodass die Kapsel mindestens teilweise aufgedeckt werden kann, indem man an der Lasche zieht; und
b. eine wiederverwendbaren Station (20), welche mit einem Innengehäuse (21) versehen ist, um die Kapsel umkehrbar zu empfangen und aufzunehmen, unter Bestimmung einer Betriebsstellung, wobei die Station mit einer geeigneten Ladeöffnung (22) versehen ist, um die Einführung und die Entnahme der Kapsel aus dem genannten Gehäuse zu ermöglichen, und wobei die Station zusätzlich mit einer Kommunikation mit dem Äußeren (23) versehen ist, welche es ermöglicht, dass die Lasche der Kapsel außerhalb des Gehäuses hervorsteht oder den Zugang dazu, wenn die Kapsel in das Gehäuse in der Betriebsstellung eingeführt ist, und man so in der Lage ist, an der Lasche zu ziehen, um die Kapsel mindestens teilweise aufzudecken, ohne sie vom Gehäuse zu entnehmen, und die Insektenschutzkomponente freizulegen.

2. System (1) nach dem vorhergehenden Anspruch, **dadurch gekennzeichnet, dass** die Kapsel (10) eine Schale (11) umfasst, wobei die abnehmbare Abdeckung (13) die Schale oben schließt.

3. System (1) nach dem vorhergehenden Anspruch, **dadurch gekennzeichnet, dass** die Kammer(n) (12) der Kapsel (10) in der Schale (11) gebildet ist/sind.

4. System (1) nach einem der vorhergehenden Ansprüche, **dadurch gekennzeichnet, dass** die Ladeöffnung (22) eine Seitenöffnung der Station (20) ist.

5. System (1) nach einem der vorhergehenden Ansprüche, **dadurch gekennzeichnet, dass** die Kommunikation mit dem Äußeren (23) Bestandteil der Ladeöffnung (22) ist und dass die Lasche (14) dimensioniert ist um nach außerhalb des Gehäuses (21) hervorzustehen, wenn die Kapsel (10) in das Gehäuse eingeführt ist.

6. System (1) nach einem der Ansprüche 1 bis 4, **dadurch gekennzeichnet, dass** die Kommunikation mit dem Äußeren (23) eine der Ladeöffnung (22) gegenüberliegenden Öffnung der Station (20) ist, und dass die Lasche (14) dimensioniert ist um nach außerhalb des Gehäuses (21) hervorzustehen, wenn die Kapsel (10) in das Gehäuse eingeführt ist.

7. System (1) nach einem der vorhergehenden Ansprüche, **dadurch gekennzeichnet, dass** die Kapsel (10) einen Griff (15) umfasst.

8. System (1) nach dem vorhergehenden Anspruch, **dadurch gekennzeichnet, dass** der Griff (15) dimensioniert ist, um von der Station (20) hervorzustehen, wenn die Kapsel in das Gehäuse (21) in der Betriebsstellung eingeführt ist.

9. System (1) nach einem der vorhergehenden Ansprüche, **dadurch gekennzeichnet, dass** die Station (20) mit Haltemitteln (26) der Kapsel (10) versehen ist, wenn sie in das Gehäuse (21) in der Betriebsstellung eingeführt ist.

10. System (1) nach dem vorhergehenden Anspruch, **dadurch gekennzeichnet, dass** die Haltemittel (26) ein Profil (28) umfassen, welches dazu angepasst ist, die Passform der Kapsel (10) zu empfangen, wobei das genannte Profil mit dem Äußeren der Station (20) angeschlossen ist, unter Bestimmung von Zugangsrampen (29) für Insekte.

11. System (1) nach einem der Ansprüche 9 bis 10, **dadurch gekennzeichnet, dass** die Haltemittel (26) einen oder mehrere Vorsprünge (33) zwischen der Ladeöffnung (22) und dem Gehäuse (21) umfassen, welche den Durchgang der Kapsel (10) behindern.

12. System (1) nach einem der vorhergehenden Ansprüche, **dadurch gekennzeichnet, dass** die Station (20) mit Führungsmitteln (24) versehen ist und die Kapsel (10) mit Nachführungsmitteln (16) versehen ist, welche komplementär zu den Führungsmitteln sind, welche das Gleiten der Kapsel (10) in die Einführungs- und Entnahmerichtung in das Gehäuse (21) führen.

13. System (1) nach dem vorhergehenden Anspruch, **dadurch gekennzeichnet, dass** die Führungsmittel (24) mindestens eine Rippe (25) umfassen und die Nachführungsmittel (16) mindestens eine Nut (17) umfassen, welche komplementär zur Rippe ist.

14. System (1) nach dem vorhergehenden Anspruch, **dadurch gekennzeichnet, dass** die Nut (17) durch die Trennung von mindestens zwei Kammern (12) der Kapsel (10) bestimmt ist.

15. Verfahren zur Bekämpfung von Insekten mit einem System nach den Ansprüchen 1 bis 14, **dadurch gekennzeichnet, dass** es Folgendes umfasst:
a. das Einführen in ein Innengehäuse (21) einer Station (20) einer Kapsel (10) mit mindestens einer Kammer (12) mit einer Insektenschutzkomponente und einer abnehmbaren Abdeckung (13), wobei die abnehmbare Abdeckung mit einer Lasche (14) versehen ist, welche dazu angepasst ist, die Kapsel mindestens teilweise aufzudecken, wenn man an der Lasche zieht, wobei die Lasche von der Station hervorsteht, wenn die Kapsel im Gehäuse in einer Betriebsstellung aufgenommen ist; und
b. das Ziehen an der Lasche, um die Kapsel mindestens teilweise aufzudecken und die Insektenschutzkomponente freizulegen.

## Revendications

1. Système (1) pour combattre des insectes comprenant:
a. une capsule (10) qui forme au moins un compartiment (12) avec un composant anti-insecte, la capsule étant pourvue d'un couvercle amovible (13) joint à une languette (14), de telle sorte que la capsule peut être au moins partiellement découverte en tirant la languette; et
b. une station réutilisable (20) pourvue d'un logement intérieur (21), afin de recevoir et de loger de manière réversible la capsule, en déterminant une position de fonctionnement, la station étant pourvue d'une ouverture de chargement appropriée (22) afin de permettre l'insertion et le retrait de la capsule dudit logement, et la station étant en outre pourvue d'une communication avec l'extérieur (23) qui permet à la languette de la capsule de dépasser à l'extérieur du logement ou de l'accès de celui-ci lorsque la capsule est insérée à l'intérieur du logement dans la position de fonctionnement et de pouvoir ainsi tirer la languette afin de découvrir au moins partiellement la capsule sans la retirer du logement et exposer le composant anti-insectes.

2. Système (1) selon la revendication précédente, **caractérisé en ce que** la capsule (10) comprend une coupelle (11), le couvercle amovible (13) fermant la coupelle sur le dessus.

3. Système (1) selon la revendication précédente, **caractérisé en ce que** le(s) compartiment(s) (12) de la capsule (10) est/sont formé(s) dans la coupelle (11).

4. Système (1) selon l'une quelconque des revendications précédentes, **caractérisé en ce que** l'ouverture de chargement (22) est une ouverture latérale de la station (20).

5. Système (1) selon l'une quelconque des revendications précédentes, **caractérisé en ce que** la communication avec l'extérieur (23) fait partie de l'ouverture de chargement (22) et **en ce que** la languette (14) est dimensionnée pour dépasser à l'extérieur du logement (21) lorsque la capsule (10) est insérée dans le logement.

6. Système (1) selon l'une quelconque des revendications 1 à 4, **caractérisé en ce que** la communication avec l'extérieur (23) est une ouverture de la station (20) opposée à l'ouverture de chargement (22) et **en ce que** la languette (14) est dimensionnée afin de dépasser à l'extérieur du logement (21) lorsque la capsule (10) est insérée dans le logement.

7. Système (1) selon l'une quelconque des revendications précédentes, **caractérisé en ce que** la capsule (10) comprend une poignée (15).

8. Système (1) selon la revendication précédente, **caractérisé en ce que** la poignée (15) est dimensionnée afin de faire saillie de la station (20) lorsque la capsule est insérée à l'intérieur du logement (21) dans la position de fonctionnement.

9. Système (1) selon l'une quelconque des revendications précédentes, **caractérisé en ce que** la station (20) est pourvue de moyens de retenue (26) de la capsule (10) lorsqu'elle est insérée à l'intérieur du logement (21) dans la position de fonctionnement.

10. Système (1) selon la revendication précédente, **caractérisé en ce que** les moyens de retenue (26) comprennent un profil (28) adapté pour recevoir l'ajustement de la capsule (10), ledit profil étant connecté à l'extérieur de la station (20) en déterminant des rampes d'accès (29) pour des insectes.

11. Système (1) selon l'une quelconque des revendications 9 à 10, **caractérisé en ce que** les moyens de retenue (26) comprennent une ou plusieurs saillies (33) entre l'ouverture de chargement (22) et le logement (21) qui obstruent le passage de la capsule (10).

12. Système (1) selon l'une quelconque des revendications précédentes, **caractérisé en ce que** la station (20) est pourvue de moyens de guidage (24) et que la capsule (10) est pourvue de moyens de suivi (16) complémentaires aux moyens de guidage qui guident le glissement de la capsule (10) dans la direction d'insertion et de retrait dans le logement (21).

13. Système (1) selon la revendication précédente, **caractérisé en ce que** les moyens de guidage (24) comprennent au moins une nervure (25) et les moyens de suivi (16) comprennent au moins une rainure (17) complémentaire à la nervure.

14. Système (1) selon la revendication précédente, **caractérisé en ce que** la rainure (17) est déterminée par la séparation d'au moins deux compartiments (12) de la capsule (10).

15. Procédé pour combattre des insectes avec un système selon les revendications 1 à 14, **caractérisé en ce qu'**il comprend:
a. insérer à l'intérieur d'un logement intérieur (21) d'une station (20) une capsule (10) avec au moins un compartiment (12) avec un composant anti-insectes et un couvercle amovible (13), le couvercle amovible étant pourvu d'une languette (14) adaptée pour découvrir au moins partiellement la capsule lorsque la languette est tirée, la languette faisant saillie de la station lorsque la capsule est logée dans le logement dans une position de fonctionnement; et
b. tirer la languette afin de découvrir au moins partiellement la capsule et d'exposer le composant anti-insectes.
